Europäisches Patentamt

European Patent Office

Office européen des brevets

(19)

(11) Publication number: **0 224 879 B1**

(12) **EUROPEAN PATENT SPECIFICATION**

(45) Date of publication of patent specification: **04.03.92** (51) Int. Cl.5: **F02B 23/10**, F02B 19/12

(21) Application number: **86116499.4**

(22) Date of filing: **27.11.86**

(54) Combustion chamber of internal combustion engine.

(30) Priority: **30.11.85 JP 270288/85**

(43) Date of publication of application:
**10.06.87 Bulletin 87/24**

(45) Publication of the grant of the patent:
**04.03.92 Bulletin 92/10**

(84) Designated Contracting States:
**DE FR GB**

(56) References cited:
EP-A- 0 205 000          WO-A-84/02744
WO-A-85/00197          DE-A- 2 154 341
FR-A- 1 015 003          FR-A- 1 076 741
FR-A- 1 198 580          GB-A- 704 800
GB-A- 1 363 107          GB-A- 2 169 656
US-A- 3 945 351

(73) Proprietor: **Isuzu Motors Limited**
**10-go, 22-ban, 6-chome, Minami-Ohi**
**Shinagawa-ku**
**Tokyo(JP)**

(72) Inventor: **Ishida, Shiro**
**Fujisawa Factory of Isuzu Motors Limited**
**8, Tsuchidana Fujisawa-shi Kanagawa(JP)**

(74) Representative: **Kraus, Walter, Dr. et al**
**Patentanwälte Kraus, Weisert & Partner**
**Thomas-Wimmer-Ring 15**
**W-8000 München 22(DE)**

EP 0 224 879 B1

Rank Xerox (UK) Business Services

# Description

The present invention relates to a combustion chamber for an internal combustion engine, comprising:
a combustion chamber in which a swirl is formed;
a fuel injection nozzle means for spraying fuel in atomized condition towards an inner wall of said combustion chamber;
a glow plug means for heating air inside the combustion chamber and for vaporizing the fuel sprayed in atomized condition;
a spark plug means for igniting the vaporized fuel, said spark plug means being disposed downstream of the glow plug means in the direction of the swirl.

More particularly, the invention is concerned with a combustion chamber of an internal combustion engine which permits the use of volatile fuels of low cetane number such as gasoline and alcohol.

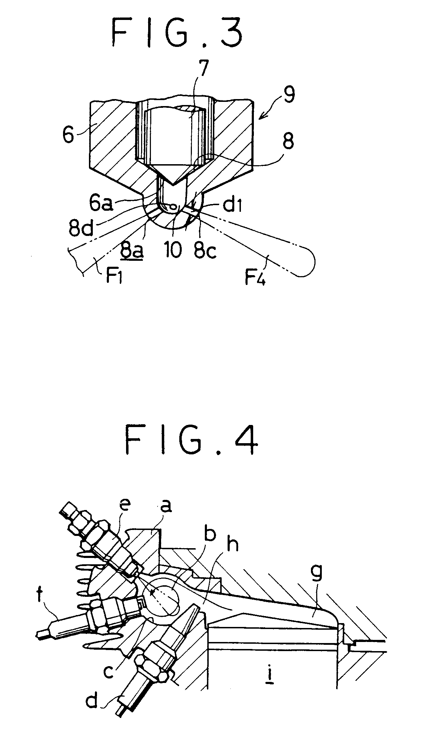

Generally, as a related technique which permits the use of coarse fuels, e.g. methanol (methyl alcohol), there has been proposed and known a combustion chamber arrangement as described in Japanese Utility Model Laid Open No. 107820/1982. According to this proposed construction, as shown in Fig. 4 of the accompanying drawings, a precombustion chamber (b) is provided sideways at the top of a cylinder (a), a preheating plug (d) is disposed obliquely in a bottom wall portion (c) of the precombustion chamber (b), further a fuel injection valve (e) is disposed opposedly to the preheating plug (d), and a spark plug (f) is disposed between the fuel injection valve (e) and the preheating plug (d).

In the above proposed construction, a glow plug is used to raise the temperature in the precombustion chamber to ignite and burn fuel in order to improve the engine start-up characteristic and drivability in a low load condition.

However, since the precombustion chamber (b) of the cylinder (a) is in communication with a main combustion chamber (g) of a piston (i) through a throat (h), a throttle loss at the time of introducing of compressed air into the preheating chamber (b) and a heat loss at the time of flowing of combustion gas from the precombustion chamber (b) into the main combustion chamber (g) are large, thus causing deterioration of the thermal efficiency.

Such deterioration of the thermal efficiency results in lowering of the combustion chamber, so there is fear of the lowering of output and the formation of unburnt material such as HC. Further, at the time of start-up at a low outside air temperature of -20°C or lower, it is necessary to take a countermeasure such as enhancing the heat generating ability of the glow plug to an extreme degree or prolonging the heating time in order to permit ignition with the spark plug and combustion without misfire because the fuel oil injected is methanol which is poor in volatility and also because the amount of fuel oil is increased at the time of start-up of the engine. This is not desirable from the stand-point of battery capacity and start-up time.

Furthermore, a combustion chamber for an internal combustion engine of the type mentioned in the beginning is known from FR-A-1 015 003. In this combustion chamber the fuel is sprayed into the air stream between the glow plug and the spark plug in a direction towards the opposite chamber wall, such that the fuel passes into a stream of preheated air prior to reaching the spark plug. However, it is desirable to enhance the combustion if fuel of low cetane number is used, particularly at start-up at a low outside air temperature of -20°C or lower.

Finally WO-A-85/00197 shows a centrally located nozzle and a glow plug within a combustion chamber in the top of a piston. This document teaches the propagation of a flame from an ignition point to other fuel sprays, and the central location of the nozzle means supplying a plurality of fuel sprays. However, the glow plug is outside the fuel sprays in a pocket of intake air which separates the fuel sprays.

The present invention has been accomplished for overcoming the above-mentioned various problems and it is the object thereof to provide a combustion chamber of an internal combustion engine capable of burning well volatile fuels of low cetane number such as alcohol and gasoline in all load conditions including low temperature start-up.

The above object is attained with a combustion chamber for an internal combustion engine of the type mentioned in the beginning which is characterized in that said nozzle means supplies a plurality of fuel sprays and said glow plug means is disposed on an injection line of one of said fuel sprays such that the fuel spray is further atomized upon collision with the glow plug means.

A further development of this combustion chamber according to the invention is characterized in that said one fuel spray is ignited by the spark plug means and other fuel sprays are ignited by flame built by said one fuel spray.

In the combustion chamber of the invention the glow plug means and the spark plug means are disposed in positions close to each other along a flowing direction of the swirl, and also disposed is the fuel injection nozzle means for injecting a spray of fuel on the glow plug means.

The operation of the above construction will now be described. Upon injection of atomized fuel from the fuel injecting nozzle means, the atomized fuel is vaporized acceleratively by an air current of high temperature created by the heat generating portion of the glow plug means. Then, the vaporized fuel mist is allowed to flow to a discharge portion of the spark plug means while mixing with air, and when discharge is made at the discharge portion upon arrival of the vaporized fuel mist-air mixture at the discharge portion, ignition is made in an instant and combustion is effected in a satisfactory manner.

BRIEF DESCRIPTION OF THE DRAWINGS

Fig. 1 is a schematic longitudinal sectional view of a combustion chamber of an internal combustion engine according to an embodiment of the present invention;
Fig. 2 is a plan view of Fig. 1;
Fig. 3 is a partial sectional view of a fuel injecting nozzle means; and
Fig. 4 is a schematic sectional view of a conventional precombustion chamber arrangement.

DESCRIPTION OF A PREFERRED EMBODIMENT

The following description is now provided about a combustion chamber of an internal combustion engine according to an embodiment of the present invention with reference to the accompanying drawings.

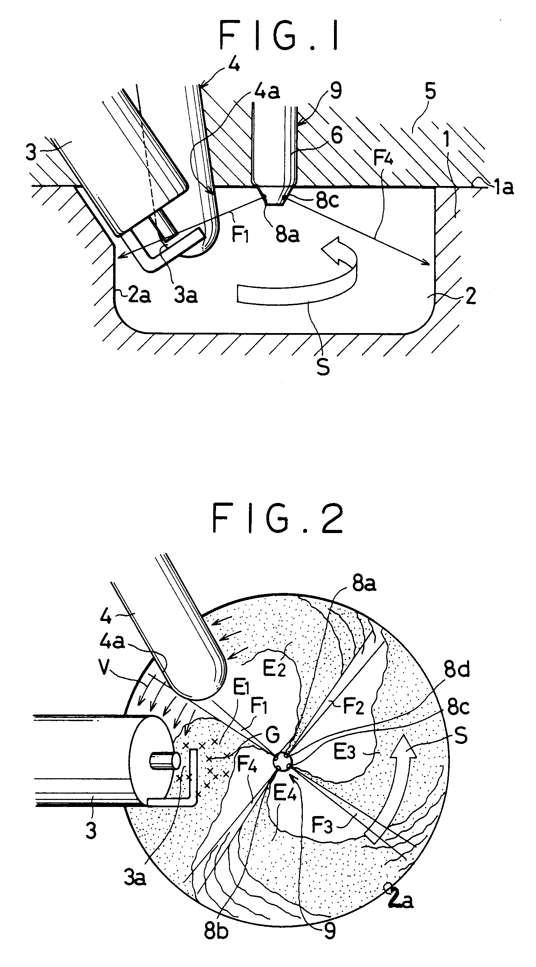

In Fig. 1, the reference numeral 1 denotes a piston top; numeral 2 denotes a combustion chamber formed by deeply recessing the piston top 1 axially downwardly with respect to a top surface 1a; and numeral 5 denotes a cylinder head.

Into the combustion chamber 2 is supplied a rotating current of intake air from a swirl port (not shown). For this rotating current the combustion chamber 2 is formed generally circularly in its transverse section perpendicular to the axis of the piston 1, so that the said rotating current becomes a swirl S flowing along an inner peripheral wall 2a of the combustion chamber 2.

The combustion chamber of the internal combustion engine of the present invention is characteristic in that volatile fuels of low cetane number can be burnt well without misfire even at the time of start-up of the engine at a low temperature.

To realize the above characteristic, a fuel injecting nozzle means for supplying atomized fuel into the combustion chamber 2, a spark plug means as an ignition accelerating means, and a glow plug means, are constructed and disposed as follows.

A spark plug means 3 is integrally fixed into the cylinder head 5 so that a discharge portion 3a thereof is positioned near the inner peripheral wall 2a of the combustion chamber 2 when the piston 1 is about to terminate its compression stroke.

Also fixed integrally into the cylinder head 5 is a glow plug means 4 in a position in which a heat generating portion 4a thereof is located near the inner peripheral wall 2a of the combustion chamber 2 when the piston 1 is about to terminate its compression stroke.

The glow plug means 4 is disposed so that the heat generating portion 4a thereof is positioned on an upstream side of the swirl S and in the vicinity of the discharge portion 3a of the spark plug means 3.

In this embodiment, as a fuel injecting nozzle means 9 there is adopted such a structure as shown in Fig. 3. As illustrated in the same figure, a needle valve 7 is disposed vertically movably within a cylindrical nozzle body 6. On a fore end side of the nozzle body 6 there is formed a valve seat 8 for a seat portion 6a of the needle valve 7. In the portion of the nozzle body 6 closer to the fore end thereof than the valve seat 8 there is formed a fuel injection chamber 10 which is brought into communication with a fuel chamber (not shown) in the nozzle body 6 when the seat portion 6a is spaced apart from the valve seat 8. In the fore end portion of the nozzle body 6 which forms the fuel injection chamber 10 there are formed a plurality of nozzle holes 8a, 8b, 8c and 8d in a circumferentially spaced relation. A diameter $d_1$ of each of the nozzle holes 8a - 8d is set so that the atomized fuel mist injected from the nozzle holes has an appropriate penetrating force for the swirl S in the combustion chamber 2 and has an appropriate spread for the combustion chamber 2.

The fuel injecting nozzle means 9 thus constructed is integrally fixed into the cylinder head 5 so that it is positioned approximately centrally relative to the cumbustion chamber 2 and the nozzle holes 8b - 8d face the inner wall 2a of the combustion chamber 2 when the piston 1 is about to terminate its compression stroke.

In this embodiment, the number of the nozzle holes is four, and one of the nozzle holes 8a - 8d, for example the nozzle hole 8a, is determined its opening direction so that fuel mist $F_1$ can be fed toward the glow plug means 4 or thereabouts.

The following description is now provided about the operation of this embodiment.

When the needle valve 7 of the fuel injecting nozzle means 9 is lifted in a direction of opening the nozzle holes 8a-8d, fuel such as alcohol or gasoline is fed in atomized condition into the combustion chamber 2 from the nozzle holes.

At the time of start-up of the engine at a low temperature, the glow plug means 4 is energized to heat the heat generating portion 4a to redness, so a high-temperature air current V is created locally downstream of the swirl near the heat generating portion 4a of the glow plug means 4. The fuel mist $F_1$ impinging on the heat generating portion 4a of the glow plug means 4 after atomized injection from the nozzle hole 8a is finely pulverized by the injection and at the same time it is vaporized in an instant by a high-temperature heat of the heat generating portion 4a, which vapor is allowed to flow to the downstream side of the swirl S. At this time, the vaporization of the fuel mist $F_1$ which has been fed in atomized condition is accelerated by the high-temperature air current V to form a fuel vapor layer which is easy to ignite and burn, in the vicinity of the discharge portion 3a of the spark plug means 3. Upon ignition of the spark plug means 3, this fuel vapor layer, indicated by $E_1$, ignites to form an extremely large group of flames G. Fuel mists $F_2$ - $F_4$ fed in atomized condition from the other nozzle holes 8b - 8d at the same time as the fuel mist $F_1$ impinge upon the inner wall 2a of the combustion chamber 1 and are thereby pulverized finely, then evaparated to a moderate extent while being allowed to flow to the downstream side of the swirl S along the inner wall 2a of the combustion chamber. As a result, fuel vapor layers $E_2$ - $E_4$ are formed, and consequently the flame group G is propagated successively to the circumferentially adjacent fuel vapor layers $E_2$ - $E_4$, whereby a complete combustion in the combustion chamber 2 is attained.

The glow plug means 4 can be heated even when the engine load is low and the mixture is lean, and by the heating thereof there can be formed the strong flame group G mentioned above. As a result, a stabler combustion is ensured in every load condition.

## Claims

1. A combustion chamber for an internal combustion engine, comprising:

   a combustion chamber (2) in which a swirl (S) is formed;

   a fuel injection nozzle means (9) for spraying fuel ($F_1$ to $F_4$) in atomized condition toward an inner wall (2a) of said combustion chamber (2);

   a glow plug means (4) for heating air inside the combustion chamber (2) and for vaporizing the fuel ($F_1$ to $F_4$) sprayed in atomized condition;

   a spark plug means (3) for igniting the vaporized fuel ($F_1$ to $F_4$), said spark plug means (3) being disposed downstream of the glow plug means (4) in the direction of the swirl (S);

   characterized in that

said nozzle means (9) supplies a plurality of fuel sprays ($F_1$ to $F_4$) and said glow plug means (4) is disposed on an injection line of one ($F_1$) of said fuel sprays ($F_1$ to $F_4$) such that said fuel spray ($F_1$) is further atomized upon collision with the glow plug means (4).

2. A combustion chamber for an internal combustion engine according to claim 1, characterized in that said one fuel spray ($F_1$) is ignited by the spark plug means (3) and the other fuel sprays ($F_2$ to $F_4$) are ignited by flame built by said one fuel spray ($F_1$).

3. A combustion chamber according to claim 1, characterized in that

   the combustion chamber (2) is defined by a recess formed in the top (1) of a piston;

   the glow plug means (4) is supported by a cylinder head (5) with its heating part (4a) being exposed in the combustion chamber (2); and

   the spark plug means (3) is supported by the cylinder head (5) with its electrode (3a) being exposed in the combustion chamber (2).

4. A combustion chamber of an internal combustion engine according to claim 3, characterized in that said fuel injection nozzle means (9) has a plurality of fuel atomizing and feeding nozzle holes (8a to 8d) at intervals in a circumferential direction, said fuel injection nozzle means (9) being positioned approximately centrally of said combustion chamber (2) with said swirl (S) formed therein.

5. A combustion chamber of an internal combustion engine according to claim 3, characterized in that said combustion chamber (2) with a swirl (S) formed therein is circular in its transverse section perpendicular to an axis thereof.

6. A combustion chamber of an internal combustion engine according to claim 4, characterized in that the transverse section of said combustion chamber (2) perpendicular to the axis thereof is in the form of a polygon such as a triangle, a square or a pentagon.

7. A combustion chamber according to any one of claims 1 to 6, wherein said fuel is a volatile fuel of low cetane number.

## Revendications

1. Chambre de combustion pour un moteur à combustion interne comprenant :

une chambre de combustion (2) dans laquelle se forme un tourbillon (S) ;

des moyens formant injecteur de carburant (9) servant à projeter un carburant ($F_1$ à $F_4$) dans l'état atomisé vers une paroi interne (2a) de ladite chambre de combustion (2) ;

des moyens formant bougie incandescente (4) servant à chauffer l'air à l'intérieur de la chambre de combustion (2) et à vaporiser le carburant ($F_1$ à $F_4$) projeté dans un état atomisé ;

des moyens formant bougie d'allumage (3) servant à allumer le carburant vaporisé ($F_1$ à $F_4$), lesdits moyens du type bougie d'allumage (3) étant disposés en aval des moyens formant bougie incandescente (4) dans le sens de l'écoulement du tourbillon (S),
caractérisée en ce que
lesdits moyens formant injecteur (9) débitent une pluralité de jets de carburant pulvérisé ($F_1$ à $F_4$) et lesdits moyens formant bougie incandescente (4) sont disposés sur la droite d'injection d'un premier ($F_1$) desdits jets de carburant pulvérisé ($F_1$ à $F_4$) de sorte que ledit jet de carburant pulvérisé ($F_1$) est encore plus finement atomisé en entrant en collision avec les moyens formant bougie incandescente (4).

2. Chambre de combustion pour un moteur à combustion interne selon la revendication 1, caractérisée en ce que ledit premier jet de carburant pulvérisé ($F_1$) est allumé par la bougie d'allumage (3) et que les autres jets de carburant pulvérisé ($F_2$ à $F_4$) sont allumés par la flamme formée par ledit premier jet de carburant pulvérisé ($F_1$).

3. Chambre de combustion selon la revendication 1, caractérisée en ce que

la chambre de combustion (2) est définie par un évidement formé dans la partie haute (1) d'un piston ;

les moyens formant bougie incandescente (4) sont supportés par une culasse de cylindre (5), avec leur partie chauffante (4a) exposée dans la chambre de combustion (2) et ;

les moyens formant bougie d'allumage (3) sont supportés par la culasse (5) du cylindre, avec leur électrode (3a) exposée dans la chambre de combustion (2).

4. Chambre de combustion de moteur à combustion interne selon la revendication 3, caractérisée en ce que lesdits moyens formant injecteur de carburant (9) possèdent une pluralité de trous (8a à 8d) d'atomisation et de distribution du carburant, situés à intervalles dans la direction circonférentielle, lesdits moyens formant injecteur de carburant (9) étant positionnés à peu près au centre de ladite chambre de combustion (2) dans laquelle se forme ledit tourbillon (S).

5. Chambre de combustion de moteur à combustion interne selon la revendication 3, caractérisée en ce que ladite chambre de combustion (2), dans laquelle se forme un tourbillon (S), est circulaire dans une section transversale perpendiculaire à son axe.

6. Chambre de combustion de moteur à combustion interne selon la revendication 4, caractérisée en ce que la section transversale de la chambre de combustion (2) perpendiculairement à son axe présente la forme d'un polygone tel qu'un triangle, un carré ou un pentagone.

7. Chambre de combustion selon une quelconque des revendications 1 à 6, dans laquelle ledit carburant est un carburant volatil à bas indice de cétane.

**Patentansprüche**

1. Brennkammer für eine Brennkraftmaschine, umfassend:

eine Brennkammer (2) in welcher ein Wirbel (S) ausgebildet wird;

eine Kraftstoffeinspritzdüsen-Einrichtung (9) zum Sprühen von Kraftstoff ($F_1$ bis $F_4$) in zerstäubtem Zustand nach einer Innenwand (2a) der Brennkammer (2) zu;

eine Glühkerzen-Einrichtung (4) zum Erhitzen von Luft innerhalb der Brennkammer (2) und zum Verdampfen des in zerstäubtem Zustand gesprühten Kraftstoffs ($F_1$ bis $F_4$);

eine Zündkerzen-Einrichtung (3) zum Zünden des verdampften Kraftstoffs ($F_1$ bis $F_4$), wobei die Zündkerzen-Einrichtung (3) in der Richtung des Wirbels (S) stromabwärts von der Glühkerzen-Einrichtung (4) angeordnet ist;

dadurch **gekennzeichnet,** daß

die Düsen-Einrichtung (9) eine Mehrzahl von Kraftstoffsprühungen ($F_1$ bis $F_4$) liefert und die Glühkerzen-Einrichtung (4) auf einer Einspritzlinie von einer ($F_1$) der Kraftstoffsprühun-

gen (F$_1$ bis F$_4$) derart angeordnet ist, daß die Kraftstoffsprühung (F$_1$) bei Kollision mit der Glühkerzen-Einrichtung (4) weiter zerstäubt wird.

2.    Brennkammer für eine Brennkraftmaschine nach Anspruch 1, dadurch **gekennzeichnet,** daß die eine Kraftstoffsprühung (F$_1$) mittels der Zündkerzen-Einrichtung (3) gezündet wird und die anderen Kraftstoffsprühungen (F$_2$ bis F$_4$) mittels der durch die eine Kraftstoffsprühung (F$_1$) aufgebauten Flamme gezündet werden.

3.    Brennkammer nach Anspruch 1, dadurch **gekennzeichnet,** daß

die Brennkammer (2) durch eine Ausnehmung begrenzt ist, welche in der Oberseite (1) eines Kolbens ausgebildet ist;

die Glühkerzen-Einrichtung (4) mittels eines Zylinderkopfs (5) gehaltert ist, wobei ihr Erhitzungsteil (4a) in der Brennkammer (2) freiliegt; und

die Zündkerzen-Einrichtung (3) mittels des Zylinderkopfs (5) gehaltert ist, wobei ihre Elektrode (3a) in der Brennkammer (2) freiliegt.

4.    Brennkammer einer Brennkraftmaschine nach Anspruch 3, dadurch **gekennzeichnet,** daß die Kraftstoffeinspritzdüsen-Einrichtung (9) eine Mehrzahl von Kraftstoffzerstäubungs- und -zuführungsdüsenlöchern (8a bis 8d) in Intervallen in einer Umfangsrichtung hat, und die Kraftstoffeinspritzdüsen-Einrichtung (9) angenähert mittig bezüglich der Brennkammer (2) mit dem darin ausgebildeten Wirbel (S) positioniert ist.

5.    Brennkammer einer Brennkraftmaschine nach Anspruch 3, dadurch **gekennzeichnet,** daß die Brennkammer (2) mit einem darin ausgebildeten Wirbel (S) in ihrem Querschnitt senkrecht zu der Achse derselben kreisförmig ist.

6.    Brennkammer einer Brennkraftmaschine nach Anspruch 4, dadurch **gekennzeichnet,** daß der Querschnitt der Brennkammer (2) senkrecht zu der Achse derselben die Form eines Polygons hat, wie eines Dreiecks, eines Quadrats oder eines Fünfecks.

7.    Brennkammer nach irgendeinem der Ansprüche 1 bis 6, worin der Kraftstoff ein flüchtiger Kraftstoff von niedriger Cetanzahl ist.

# F I G . 1

# F I G . 2

# FIG.3

# FIG.4